# EUROPEAN PATENT SPECIFICATION

(11) **EP 2 602 153 B1**
(45) Date of publication and mention of the grant of the patent: **27.04.2016**
(21) Application number: 12195392.1
(22) Date of filing: 04.12.2012
(51) Int. Cl.: B60N 3/06, A47G 27/04, B60N 3/04

(54) **Fixing device for floor mat**
Befestigungsvorrichtung für eine Fußmatte
Dispositif de fixation pour tapis de sol

(30) Priority: 06.12.2011 GB 201120913
(43) Date of publication of application: 12.06.2013
(73) Proprietor: Nissan Motor Manufacturing (UK) Ltd., Cranfield Bedfordshire MK43 0DB (GB)
(72) Inventor: Steyn, Richard, Cranfield, Bedfordshire MK430DB (GB)

(56) References cited:
- GB-A- 2 189 696

## Description

### Technical Field of the Invention

The present invention relates to a fixing device for a floor mat in a vehicle.

### Background to the Invention

It is known to provide floor mats for use in vehicles. Vehicle floor mats are designed for placement in a foot well of a vehicle on top of the original equipment fitted carpet. They help to protect the carpet from wear, and provide a suitable surface on which a driver or passenger can place their feet. Vehicle floor mats are made from a range of materials including rubber; synthetic rubber; and textile materials, such as looped polyamide or velour.

A problem with vehicle floor mats is their tendency to move within the foot well, particularly during braking or acceleration; or when a user enters or leaves the vehicle, and pushes on the mat as they settle their feet. This is inconvenient for the user, and can present safety concerns if the driver's mat slides under the foot pedals of the vehicle.

To prevent vehicle floor mats from sliding, it is known to provide clips or other fixings to secure the mats in place. Typically, the known fixings comprise lugs attached to the OEM (Original Equipment Manufacturer - that is, as fitted by the car maker) carpet, which locate in apertures in a mat. Such fixings are effective, but require the floor mat to have appropriate apertures to receive the lugs. They may also require the vehicle operator to kneel on the ground to fit or remove mats. This action may soil clothing; and may be uncomfortable, or even irreversible, for elderly vehicle owners.

Vehicle manufacturers will usually supply floor mats (either as original equipment, or as accessories) with the appropriate apertures especially designed for the vehicles they produce. However, many vehicle dealers and after market outlets supply mats for vehicles which cannot be secured in position using the OEM fitted lugs. Because these mats are not secured in position, they have a tendency to move as discussed above. Whilst such mats are not provided by the vehicle manufacturer, this problem is a concern to vehicle manufacturers; as end users will often cite moving mats as an issue in surveys regarding vehicle owners' satisfaction, even where the mats are not supplied by the vehicle manufacturer. Therefore, a vehicle's satisfaction rating may be adversely affected by an issue over which the vehicle manufacturer has little control.

A welt, or elongate carpet edging, is known from GB 2,189,696A. This is a trim piece which gives a neat appearance at the edge of a carpet. Although installation of this welt in an over-centre action is described in detail, there is no description of its removal; so its fitment is apparently not reversible. Furthermore, the welt does not specifically locate the carpet.

A vehicle carpet fixing device which shows the features of the preamble of claim 1 known from GB 2,271,143A. This device locates in a hole formed in the carpet away from its edge, and comprises a cap member 15 mounted to a stud 8 on a floor panel; and a separate clip 2 attached to the cap. The clip comprises members 22A and 22B, which engage with each other and with the cap. As members 22A and 22B are connected by a flexible coupling member 22C, they must be manually guided into mutual engagement.

There is a need then, for a fixing device for a vehicle floor mat that overcomes; or at least mitigates; some or all of the above mentioned problems.

In particular, there is a need for a fixing device for a vehicle floor mat that allows mats to be secured in position using lugs fitted to an OEM carpet, even where the mat does not have the appropriate apertures.

### Summary of the Invention

According to a first aspect of the invention, there is provided a fixing device for a floor mat in a vehicle, the device comprising a clip arrangement for securing to a rear edge of a mat, and having means for securing the clip arrangement to a mat fixing formation attached to a carpet of the vehicle; wherein the device comprises a body having opposed upper and lower jaw members between which a rear edge region of a mat can be received, the body defining an aperture in the lower jaw member for engagement with outer surfaces of the upper and lower jaw members of the body respectively.

The body may be made of a polymeric material, while the resilient clip may be made of a metallic material.

In an example, one of the upper and lower jaw members may be pivotally attached to the other of the upper and lower jaw members for movement between a jaws open and a jaws closed position.

In an example, the lower jaw member may comprise a lower jaw portion for positioning beneath the rear edge region of a mat and an end portion extending upwardly from a rear end of the lower jaw portion for location about the rear edge of the mat, a rear edge of the upper jaw member being pivotally mounted to the end portion by means of a first hinge, the over-centre hinge comprising a first hinge portion connected with, and projecting downwardly at an angle from, the rear end of the upper jaw member and a second hinge portion pivotally connected to an inner surface of the lower jaw member by a second hinge and projecting upwardly therefrom, the first and second over-centre hinge portions being interconnected by means of a third hinge.

The device may be configured such that when the upper jaw is in the closed position, the first and second over-centre hinge portions project rearwardly towards the end portion; and when the upper jaw member is in the open position, the first and second over-centre hinge portions project forwardly away from the end portion. The end portion may be arcuate.

The device may comprise a releasable detent arrangement for releasably retaining said one of the upper and lower jaw members in the closed position.

The lower jaw member may comprise a lower jaw portion for positioning beneath the rear edge region of a mat and an end portion extending upwardly from a rear end of the lower jaw portion for location about the rear edge of the mat, a rear edge of the upper jaw member being pivotally mounted to the end portion by means of a first hinge, the releasable detent arrangement comprising a first detent member on the lower jaw member and a second detent member on the upper jaw member, the first and second detent members having corresponding formations that engage to releasably retain the upper jaw member in the closed position.

The first detent member may comprise a resilient clip formation on the end portion of the lower jaw member, and the second detent member may comprise a first projection extending downwardly and rearwardly from the upper jaw member, the projection having a detent formation for engagement in the clip when the upper jaw member is in the closed position.

The detent formation may be further supported by means of a second projection extending upwardly and rearwardly from the lower jaw portion of the lower jaw member. The end portion may be arcuate.

Aside from the clip, where fitted, the device may comprise a single integral component manufactured from one or more polymeric materials. In which case, where the device has an over-centre hinge mechanism, the first, second, and third hinges may be live hinges. The fixing device may be an extruded component.

At least one of the upper and lower jaw members may have at least one mat engaging formation. The at least one mat engaging formation may comprise an elongate retention bar, or at least one tooth. The bar or at least one tooth may be rearwardly directed in use.

### Detailed Description of the Invention

In order that the invention may be more clearly understood, embodiments thereof will now be described - by way of example only - with reference to the accompanying drawings, of which:
Figure 1 is a perspective view of a fixing device for a vehicle mat in accordance with one embodiment of the invention;
Figure 2 is a longitudinal cross sectional view on line F2-F2 through the fixing device of Figure 1, showing the device in situ located on an OEM mat mounting lug with an upper jaw member in an open position;
Figure 3 is a longitudinal cross sectional view of the fixing device of Figure 1, showing the device in situ on an OEM mat mounting lug with the upper jaw member in a closed position so as to grip a rear edge region of a mat;
Figure 4 is a plan view illustrating the use of two of the fixing devices of Figures 1 to 3 to secure a mat in position in a vehicle;
Figure 5 is a perspective view of a fixing device for a vehicle mat in a simplified view to illustrate the application of clips to the fixing device;
Figure 6 is a longitudinal cross sectional view on line F6-F6 through the fixing device of Figure 5 showing the device in situ on an OEM mat mounting lug with an upper jaw member in a closed position; and
Figures 7 to 9 are views similar to those of Figures 1 to 3 respectively, but showing a fixing device for a vehicle mat in accordance with a further embodiment of the invention.

In the following description, the same reference numerals but increased by 100 in each case will be used to designate the same features, or features that perform essentially the same function, in each of the embodiments described.

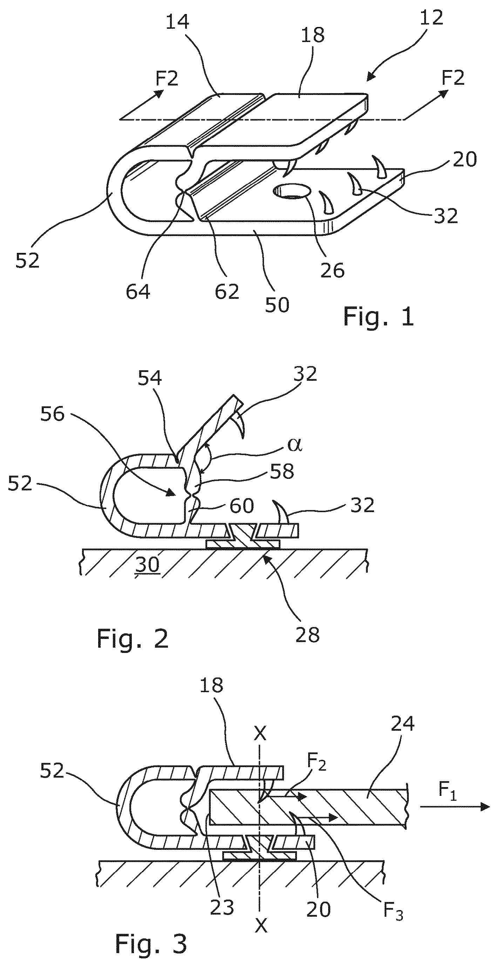

Figures 1 to 3 illustrate a first embodiment of a fixing device 12 in accordance with the present invention. The fixing device 12 has a body 14, which may be made from any suitable material but is conveniently made from plastics (one or more polymeric materials) by moulding or extrusion.

The body 14 has a substantially rigid upper jaw member 18 pivotally mounted to a lower jaw member 20. The lower jaw member includes a substantially rigid and substantially planar lower jaw portion 50 for positioning beneath the rear edge region of a mat and an end portion 52 extending upwardly from a rear end of the lower jaw portion 50 for location about the rear edge 23 of the mat 24. The end portion 52 is arcuate, as shown in the Figures; and although substantially rigid, can flex to a limited extent. An aperture 26 for receiving a mat fixing lug 28 is provided in the lower jaw portion 50.

The upper jaw member 18 is a substantially planar member which is pivotally connected to the end portion 52 of the lower jaw member 20 by means of a first live hinge 54. The upper jaw member 18 can be pivoted about the first live hinge 54 between a closed position as shown in Figures 1 and 3, and an open position as shown in Figure 2. In the open position, the upper jaw member 18 projects at an angle upwardly away from the lower jaw portion 50. With the upper jaw member in this position, an edge region 23 of a vehicle mat 24 can be inserted between the upper and lower jaw members. In the closed position, the upper jaw member 18 overlies at least part of the lower jaw portion 50; and is aligned generally parallel to, or is inclined downwardly slightly towards, the lower jaw portion 50.

To retain the upper jaw member 18 in the closed position, the upper and lower jaw members are interconnected by an over-centre hinge mechanism 56. The over-centre hinge mechanism 56 includes a first hinge member 58 connected rigidly with a rear edge of the upper jaw member 18. In the present embodiment, the first hinge member 58 is formed integrally with the upper jaw member 18 as an extension thereof. The first hinge member 58 projects downwardly at an obtuse angle α to the inner surface of the upper jaw member 18; and is configured so that it projects rearwardly when the upper jaw member 18 is in the closed position, and projects forwardly when the upper jaw member 18 is in the open position. The over-centre hinge 56 also includes a second hinge member 60 which projects upwardly from the lower jaw member 20, and is pivotally connected to the lower jaw member by means of a second live hinge 62. Inner ends of the first and second hinge members 58, 60 are radiused, and are connected together by means of a third live hinge 64.

When the upper jaw member 18 is in the closed position, the first and second hinge members 58, 60 are both directed towards the rear of the body. To move the upper jaw member 18 to the open position, the upper jaw member is pivoted upwardly about the first live hinge 54. As the upper jaw member is pivoted upwardly, the first hinge member 58 rotates until it projects forwardly. The second hinge member 60 is also caused to pivot about the second live hinge 62 from a rearwardly directed position to a forwardly directed position as the upper jaw member is moved to the open position. During this movement, the radiused inner ends of the two hinge members 58, 60 roll over one another.

In an intermediate position between the open and closed positions, the two hinge members 58, 60 will be aligned substantially vertically; so their combined length will be greater than the normal spacing between the rear edge of the upper jaw member 18 and the lower jaw member 20. To accommodate this, the end portion 52 is able to flex outwardly slightly. Accordingly, the upper jaw member 18 can be moved between the open and closed positions by applying a sufficient force to move the over-centre hinge members 58, 60 between their rearward and forward facing positions; but is otherwise held in either the open or the closed position.

The upper and lower jaw members 18, 20 have mat engaging formations in the form of rearwardly directed teeth 32, which engage with the rear edge portion of a mat 24 placed between the upper and lower jaw members when the upper jaw member 18 is in the closed position. The rearwardly directed teeth 32 are located forwardly of the centre line (X-X, Fig. 3) of the mat fixing lug aperture 26. This is advantageous, as any forwardly directed force F₁ applied to the mat will tend to apply corresponding forces F₂, F₃ to the teeth; which will tend to draw the upper jaw member 18 downwardly into tighter engagement with the mat.

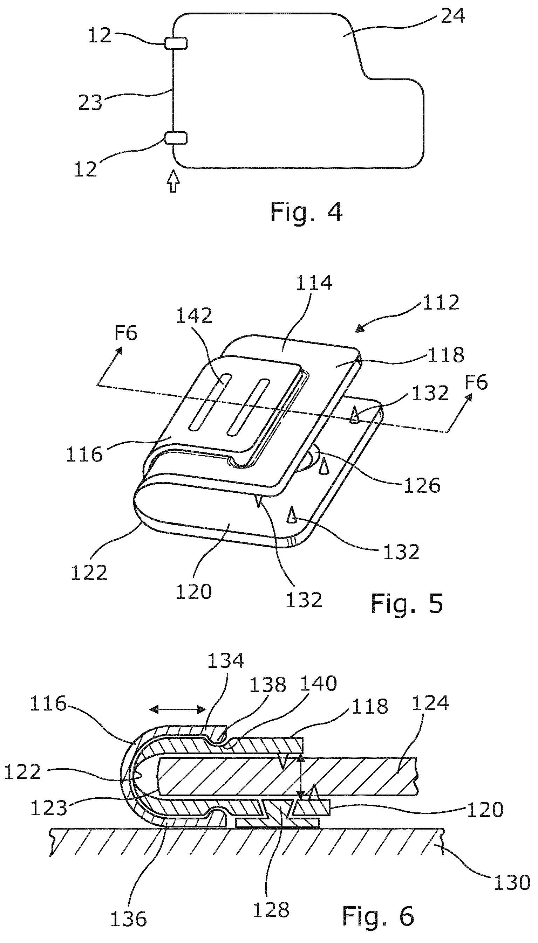

Fig. 4 shows two fixing devices 12 attached to a rear edge of a mat 24, at suitable positions for location of the apertures 26 about fixing lugs 28 attached to a carpet of the vehicle. Once the fixing devices 12 are located on the mat fixing lugs and closed, they secure the mat in position, resisting forward movement of the mat during normal use of the vehicle.

A simplified view of a fixing device 112 for securing a mat 124 in a vehicle is shown in Figures 5 and 6. The device 112 comprises a main body portion 114 and a separable, resilient clip 116.

The main body 114 is a generally U-shaped component having substantially rigid, opposed upper and lower jaw members 118, 120 interconnected along their rear edges by means of a flexible, arcuate hinge member 122. The body portion 114 is designed to be placed about a rear edge portion 123 of a vehicle mat 124 as illustrated in Figure 6, with the lower jaw member 120 positioned beneath the lower surface of the mat and the upper jaw member 118 positioned above the upper surface of the mat; and the hinge member 122 extending about the rear edge of the mat. An aperture 126 is provided in the lower jaw member 120, and is configured to receive a mat fixing lug (128, Fig. 6) affixed to a carpet 130 of the vehicle.

The upper and lower jaw members 118, 120 of the body 114 have inwardly projecting mat engaging formations 132. In the present embodiment, the mat engaging formations 132 are in the form of conical teeth. Where the mat 124 is made of a fabric, the teeth 132 may be inserted into the fabric in use. Where the mat 124 is made of rubber or a synthetic rubber or the like, the teeth or other formations may bite into the surfaces of the mat; or may engage with corresponding formations on the surfaces of the mat.

The resilient clip 116 is also a generally U-shaped component having opposed upper and lower jaw members 134, 136 for engagement with outer surfaces of the upper and lower jaw members 118, 120 of the body portion 114 respectively. When engaged on the body, the resilient clip biases the upper and lower jaw members 118, 120 of the body portion towards each other to a closed position in which the jaw members 118, 120 grip a rear edge region of a mat 124 located between them. When the resilient clip 116 is removed from the body 114, the upper and lower jaw members 118, 120 of the body can be moved apart to an open position to allow the body to be positioned about, or removed from, the rear edge 123 of a mat 124.

Ridges 138 are provided along the inner edges of the upper and lower jaw members 134, 136 of the clip 116 for engagement in corresponding grooves 140 in the outer surfaces of the upper and lower jaw members 118, 120 of the body 114 when the clip is fully inserted about the body. Engagement of the ridges 138 in the grooves 140 releasably holds the clip 116 on the body 114 in use. It will be appreciated that other co-operating or mutually engaging formations could be provided for the same purpose.

Ridges 142 are also provided on the outer surfaces of the upper and lower jaw members 134, 136 of the clip 116 to make it easier for a user to position the clip on the body and/or to remove the clip 116 from the body 114.

The clip 116 is narrower than the body portion 114, and can be made of any suitable material. In one embodiment, the clip 116 is made from a metallic material, such as spring steel. The body 114 may also be made from any suitable material, but may conveniently be manufactured from plastics by moulding or extrusion.

To position a fixing device 112 on a mat 124, the clip 116 is initially separated from the body 114. The upper and lower jaw members 118, 120 of the body 114 are moved apart to allow the body to be positioned about the rear edge region of a mat 124 with the upper jaw member 118 above the mat and the lower jaw member 120 below the mat. The clip 116 is then inserted over the rear end of the body 114 until the ridges 138 engage in the grooves 140. When the clip 116 is in position, it biases the upper and lower jaw members 118, 120 of the main body towards each other so that they grip the end region 123 of the mat. In use, two fixing devices 112 are located in spaced relation along the rear edge of the mat at appropriate locations as shown in Figure 4, so that when the mat 124 is positioned in the vehicle, mat fixing lugs 128 attached to the carpet of the vehicle engage in the apertures 126. The fixing devices 112 are held in position by the lugs 128; by gripping the rear edge region of the mat 124, they resist forward displacement of the mat in the foot well.

It will be appreciated that the precise sequence of steps taken to fit the fixing devices 112 can be varied from that described above. For example, the body members 114 could be located on the lugs 128 before the rear edge region of the mat 124 is inserted between the upper and lower jaw members 118, 120, and the clip 116 is applied.

Fixing devices 12, 112 in accordance with the present invention can be used to secure a mat in a vehicle using the mat fixing lugs 28, 128 affixed to the vehicle carpet by the OEM, even where the mat is not provided with appropriate apertures for receiving the mat fixing lugs. This enables secure fitment of non-OEM mats, for example as may be supplied by vehicle dealers or other aftermarket outlets, overcoming many of the problems with the prior art arrangements. Fixing devices 12, 112 in accordance with the invention can be provided in a range of sizes to suit different mats.

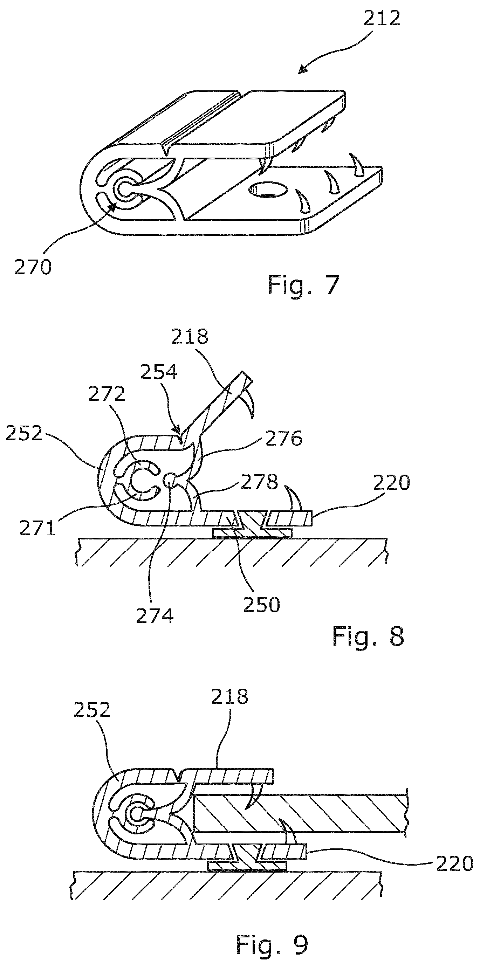

Figures 7 to 9 illustrate a further embodiment of a fixing device 212 in accordance with the present invention. The fixing device 212 in accordance with the second embodiment is similar to that of the first embodiment 12 described above, so only the differences will be described in detail.

The fixing device 212 in accordance with the second embodiment differs from the first embodiment in that its over-centre hinge arrangement comprises a releasable locking detent arrangement 270 for releasably holding the upper jaw member 218 in the closed position.

The releasable detent arrangement 270 includes a resilient clip formation 272 linked to the inner surface of the end portion 252 of the lower jaw member 220 by a first detent member 271, and a detent formation 274 mounted to the upper jaw member 218, detent 274 being releasably engaged in the clip 272 when the upper jaw member is in the closed position. Clip 272 is formed as an elongate C-section clip, in a shape complementary to detent formation 274, which is formed as an elongate partially cylindrical rib. Detent formation 274 is attached to the upper jaw member 118 by means of a first projection (or second detent member) 276 extending downwardly and rearwardly from the inner surface of the upper jaw member.

Detent formation 274 is further supported by means of a second projection 278 extending upwardly and rearwardly from the lower jaw portion 250 of the lower jaw member 220. When the upper jaw member 218 is moved to the closed position, as shown in Figures 7 and 9, detent formation 274 is pressed into clip 272, forcing the arms of the clip apart. Once detent formation 274 is fully inserted into clip 272, the arms of the clip close about the detent, holding the upper jaw member 218 in the closed position. To open the fixing device 212, sufficient force must be applied to the upper jaw member 218 to pivot it upwardly, and hence to extract detent formation 274 from clip formation 272.

It will be appreciated that alternative locking detent arrangements could be used to retain the upper jaw member 218 in the closed position.

The above embodiments are described by way of example only. Many variations are possible without departing from the scope of the invention as defined in the appended claims. For example, retention bars of a longitudinal cross-section equivalent to teeth 32, 132 may be substituted for said teeth. Such longitudinal bars could be made at least as effective as teeth; would be easier to make as part of an extruded fixing device; and would be less likely to hurt vehicle users if they put their fingers between the jaws for any reason. It will also be appreciated that in either of the first and second embodiments, the body 14, 214 could be designed so that the lower jaw member 20, 220 is moved relative to the upper jaw member 18, 218 between open and closed positions.

## Claims

1. A fixing device (12, 112, 212) for a floor mat (24, 124, 224) in a vehicle, the device comprising a clip arrangement for securing to a rear edge (23, 123) of a mat (24, 124, 224) and having means for securing the clip arrangement to a mat fixing formation (28, 128, 228) attached to a carpet (30, 130, 230) of the vehicle;
wherein the device comprises a body (14, 114) having opposed upper (18, 118, 218) and lower (20, 120, 220) jaw members between which a rear edge region (23, 123) of a mat (24, 124, 224) can be received, the body (14, 114) defining an aperture (26, 126) in the lower jaw member (20, 120, 220) for receiving a mat fixing lug (28, 128, 228), at least one of the jaw members being movable between a jaws open position and a jaws closed position, the device having means (56, 272, 274) for releasably retaining the jaw members in the closed position;
and wherein one of the upper (18, 118, 218) and lower (20, 120, 220) jaw members is pivotally attached to the other of the upper and lower jaw members for movement between a jaws open and a jaws closed position; **characterized in that**:
the jaw members are interconnected by means of an over-centre hinge (56) configured to releasably retain said one of the upper (18, 118, 218) and lower (20, 120, 220) jaw members in the closed position.

2. A fixing device (12, 112, 212) as claimed in claim 1, in which the upper jaw member (18, 118, 218) is pivotally attached to the lower jaw member (20, 120, 220) for movement between a jaws open and a jaws closed position.

3. A fixing device (112) as claimed in claim 1 or claim 2, wherein the device comprises a separable resilient clip (116) for engagement about the body (114) for biasing the upper (118) and lower (120) jaw members to the closed position; and wherein the clip (116) and the body (114) have inter-engaging formations (138, 140) for releasably securing the clip (116) on the body (114).

4. A fixing device (112) as claimed in claim 3, wherein the body (114) is made of a polymeric material and the resilient clip (116) is made of a metallic material.

5. A fixing device (12) as claimed in any preceding claim, wherein the lower jaw member (20) comprises a lower jaw portion (50) for positioning beneath the rear edge (23) region of a mat (24) and an end portion (52) extending upwardly from a rear end of the lower jaw portion (50) for location about the rear edge (23) of the mat (24), a rear edge of the upper jaw member (18) being pivotally mounted to the end portion (52) by means of a first hinge (54), the over-centre hinge (56) comprising a first hinge portion (58) connected with, and projecting downwardly at an angle from, the rear end of the upper jaw member (18) and a second hinge portion (60) pivotally connected to an inner surface of the lower jaw member (20) by a second hinge (62) and projecting upwardly therefrom, the first (58) and second (60) over-centre hinge portions being interconnected by means of a third hinge (64).

6. A fixing device (12) as claimed in claim 5, wherein the device is configured such that:
when the upper jaw (18) is in the closed position, the first (58) and second (60) over-centre hinge portions project rearwardly towards the end portion (52);
and when the upper jaw member (18) is in the open position, the first (58) and second (60) over-centre hinge portions project forwardly away from the end portion (52).

7. A fixing device (212) as claimed in any preceding claim, the device comprising a releasable detent arrangement (270) for releasably retaining said one of the upper (218) and lower (220) jaw members in the jaws closed position.

8. A fixing device (212) as claimed in claim 7, wherein the lower jaw member (220) comprises a lower jaw portion (250) for positioning beneath the rear edge region of a mat and an end portion (252) extending upwardly from a rear end of the lower jaw portion (250) for location about the rear edge of the mat, a rear edge of the upper jaw member (218) being pivotally mounted to the end portion (252) by means of a first hinge (254), the releasable detent arrangement (270) comprising a first detent member (271) on the lower jaw member (220) and a second detent member (276) on the upper jaw member (218), the first and second detent members having corresponding formations (272, 274) that engage to releasably retain the upper jaw member (218) in the closed position.

9. A fixing device (212) as claimed in claim 8, wherein the first detent member (271) comprises a resilient clip formation (272) on the end portion (252) of the lower jaw member (220), the second detent member (276) comprising a first projection extending downwardly and rearwardly from the upper jaw member (218), the projection having a detent formation (274) for engagement in the resilient clip formation (272) when the upper jaw member (218) is in the closed position.

10. A fixing device (212) as claimed in claim 9, wherein the detent formation (274) is further supported by means of a second projection (278) extending upwardly and rearwardly from the lower jaw portion (250) of the lower jaw member (220).

11. A fixing device (12, 212) as claimed in any one of claims 5 to 10, wherein the first (54, 254), second (62), and third (64) hinges are live hinges.

12. A fixing device (12, 212) as claimed in claim 11, wherein the device is an extruded component.

13. A fixing device (12, 112, 212) as claimed in any preceding claim, wherein at least one of the upper (18, 118, 218) and lower (20, 120, 220) jaw members has at least one mat engaging formation (32, 132).

14. A fixing device (12, 112, 212) as claimed in claim 13, wherein the at least one mat engaging formation (32, 132) comprises at least one tooth.

15. A fixing device (12, 112, 212) as claimed in claim 14, wherein the at least one tooth (32, 132) is rearwardly directed in use.

## Patentansprüche

1. Befestigungsvorrichtung (12, 112, 212) für eine Fußmatte (24, 124, 224) in einem Fahrzeug, wobei die Vorrichtung eine Clipanordnung zum Sichern einer Hinterkante (23, 123) einer Matte (24, 124, 224) aufweist und Mittel zum Sichern der Clipanordnung an einer Mattenbefestigungsformation (28, 128, 228) hat, welche an einem Teppichboden (30, 130, 230) des Fahrzeugs befestigt ist;
wobei die Vorrichtung einen Körper (14, 114) mit einem oberen (18, 118, 218) und einem diesem gegenüberliegenden unteren (20, 120, 220) Backenelement aufweist, zwischen denen ein Hinterkantenabschnitt (23, 123) einer Matte (24, 124, 224) aufgenommen werden kann, wobei der Körper (14, 114) eine Öffnung (26, 126) im unteren Backenelement (20, 120, 220) zum Aufnehmen einer Matten-Befestigungsöse (28, 128, 228) definiert, wobei wenigstens eines der Backenelemente zwischen einer geöffneten Backenposition und einer geschlossenen Backenposition bewegbar ist, wobei die Vorrichtung Mittel (56, 272, 274) zum lösbaren Halten der Backenelemente in der geschlossenen Position aufweist;
und wobei eines des oberen (18, 118, 218) und des unteren (20, 120, 220) Backenelements zum Bewegen zwischen einer geöffneten Backenposition und einer geschlossenen Backenposition schwenkbar an dem anderen des oberen und des unteren Backenelements befestigt ist; **dadurch gekennzeichnet, dass**:
die Backenelemente über ein Übertotpunktscharnier (56) miteinander verbunden sind, welches konfiguriert ist, um eines des oberen (18, 118, 218) und des unteren (20, 120, 220) Backenelements in der geschlossenen Position lösbar zu halten.

2. Befestigungsvorrichtung (12, 112, 212) nach Anspruch 1, in der das obere Backenelement (18, 118, 218) für eine Bewegung zwischen einer geöffneten Backenposition und einer geschlossenen Backenposition schwenkbar an dem unteren Backenelement (20, 120, 220) befestigt ist.

3. Befestigungsvorrichtung (112) nach Anspruch 1 oder 2, wobei die Vorrichtung einen lösbaren elastischen Clip (116) zum Eingreifen um den Körper (114) herum umfasst, um das obere (118) und das untere (120) Backenelement in die geschlossene Position vorzuspannen; und wobei der Clip (116) und der Körper (114) ineinander eingreifende Formationen (138, 140) zum lösbaren Sichern des Clips (116) an dem Körper (114) aufweisen.

4. Befestigungsvorrichtung (112) nach Anspruch 3, wobei der Körper (114) aus einem Polymermaterial ausgebildet ist und der elastische Clip (116) aus einem metallischen Material ausgebildet ist.

5. Befestigungsvorrichtung (12) nach einem der vorhergehenden Ansprüche, wobei das untere Backenelement (20) Folgendes umfasst: einen unteren Backenabschnitt (50) zum Positionieren unter der Hinterkantenregion (23) einer Matte (24) und einen Endabschnitt (52), der sich zum Anordnen um die Hinterkante (23) der Matte (24) herum von einem hinteren Ende des unteren Backenabschnitts (50) nach oben erstreckt, eine Hinterkante des oberen Backenelements (18), die über ein erstes Scharnier (54) schwenkbar an dem Endabschnitt (52) befestigt ist, wobei das Übertotpunktscharnier (56) einen ersten Scharnierabschnitt (58), der mit dem hinteren Ende des oberen Backenelements (18) verbunden ist und sich von dort in einem Winkel nach unten erstreckt, und einen zweiten Scharnierabschnitt (60), der über ein zweites Scharnier (62) schwenkbar mit einer Innenoberfläche des unteren Backenelements (20) verbunden ist und sich von dort nach oben erstreckt, wobei der erste (58) und der zweite (60) Übertotpunktscharnierabschnitt über ein drittes Scharnier (64) miteinander verbunden sind.

6. Befestigungsvorrichtung (12) nach Anspruch 5, wobei die Vorrichtung derart ausgebildet ist, dass:
wenn die obere Backe (18) in der geschlossenen Position ist, der erste (58) und der zweite (60) Übertotpunktscharnierabschnitt sich nach hinten zum Endabschnitt (52) hin erstrecken;
und wenn das obere Backenelement (18) in der geöffneten Position ist, der erste (58) und der zweite (60) Übertotpunktscharnierabschnitt sich nach vorn vom Endabschnitt (52) weg erstrecken.

7. Befestigungsvorrichtung (212) nach einem der vorhergehenden Ansprüche, wobei die Vorrichtung eine lösbare Rastanordnung (270) zum lösbaren Halten des einen des oberen (218) und des unteren (220) Backenelements in der geschlossenen Backenposition umfasst.

8. Befestigungsvorrichtung (212) nach Anspruch 7, wobei das untere Backenelement (220) Folgendes umfasst: einen unteren Backenabschnitt (250) zum Platzieren unterhalb des Hinterkantenabschnitts einer Matte sowie einen Endabschnitt (252), der sich zum Anordnen um die Hinterkante der Matte herum von einem hinteren Ende des unteren Backenabschnitts (250) aus nach oben erstreckt, eine Hinterkante des oberen Backenelements (218), die über ein erstes Scharnier (254) schwenkbar an dem Endabschnitt (252) befestigt ist, wobei die lösbare Rastanordnung (270) ein erstes Rastelement (271) auf dem unteren Backenelement (220) und ein zweites Rastelement (276) auf dem oberen Backenelement (218) umfasst, wobei das erste und das zweite Rastelement entsprechende Formationen (272, 274) aufweisen, die in Eingriff treten, um das obere Backenelement (218) in der geschlossenen Position zu halten.

9. Befestigungsvorrichtung (212) nach Anspruch 8, wobei das erste Rastelement (271) eine elastische Clipformation (272) am Endabschnitt (252) des unteren Backenelements (220) umfasst, wobei das zweite Rastelement (276) einen ersten Vorsprung umfasst, der sich von dem oberen Backenelement (218) nach unten und nach hinten hin erstreckt, wobei der Vorsprung eine Rastformation (274) aufweist, um mit der elastischen Clipformation (272) in Eingriff zu treten, wenn das obere Backenelement (218) in der geschlossenen Position ist.

10. Befestigungsvorrichtung (212) nach Anspruch 9, wobei die Rastformation (274) ferner durch Mittel einer zweiten Formation (278) gestützt ist, welche sich von dem unteren Backenabschnitt (250) des unteren Backenelements (220) aus nach oben und nach hinten hin erstreckt.

11. Befestigungsvorrichtung (12, 212) nach einem der Ansprüche 5 bis 10, wobei das erste (54, 254), das zweite (62) und das dritte (64) Scharnier Filmscharniere sind.

12. Befestigungsvorrichtung (12, 212) nach Anspruch 11, wobei die Vorrichtung eine extrudierte Komponente ist.

13. Befestigungsvorrichtung (12, 112, 212) nach einem der vorhergehenden Ansprüche, wobei das obere (18, 118, 218) und/oder das untere (20, 120, 220) Backenelement wenigstens eine Matteneingriffsformation (32, 132) aufweist.

14. Befestigungsvorrichtung (12, 112, 212) nach Anspruch 13, wobei die wenigstens eine Matteneingriffsformation (32, 132) wenigstens einen Zahn aufweist.

15. Befestigungsvorrichtung (12, 112, 212) nach Anspruch 14, wobei der wenigstens eine Zahn (32, 132) im Gebrauch nach hinten hin ausgerichtet ist.

## Revendications

1. Dispositif de fixation (12, 112, 212) pour un tapis de plancher (24, 124, 224) dans un véhicule, le dispositif comprenant un agencement de cale pour arrimage à un bord arrière (23, 123) d'un tapis (24, 124, 224) et comportant des moyens pour arrimer l'agencement de cale à une formation de fixation de tapis (28, 128, 228) attaché à une moquette (30, 130, 230) du véhicule ;
dans lequel le dispositif comprend un corps (14, 114) ayant des éléments de mâchoires supérieure (18, 118, 218) et inférieure (20, 120, 220) opposés entre lesquels une région de bord arrière (23, 123) d'un tapis (24, 124, 224) peut être reçue, le corps (14, 114) définissant une ouverture (26, 126) dans l'élément de mâchoire inférieure (20, 120, 220) permettant de recevoir un ergot de fixation de tapis (28, 128, 228), au moins l'un des éléments de mâchoires étant mobile entre une position ouverte de mâchoire et une position fermée de mâchoire, le dispositif comportant des moyens (56, 272, 274) permettant de retenir de façon libérable les éléments de mâchoires dans la position fermée ;
et dans lequel l'un des éléments de mâchoires supérieure (18, 118, 218) et inférieure (20, 120, 220) est attaché de façon pivotante à l'autre des éléments de mâchoires supérieure et inférieure pour mouvement entre une position ouverte de mâchoire et une position fermée de mâchoire ; **caractérisé en ce que** :
les éléments de mâchoires sont interconnectés au moyen d'une charnière excentrique (56) configurée pour retenir de façon libérable ledit un des éléments de mâchoires supérieure (18, 118, 218) et inférieure (20, 120, 220) dans la position fermée.

2. Dispositif de fixation (12, 112, 212) selon la revendication 1, dans lequel l'élément de mâchoire supérieure (18, 118, 218) est attaché en pivotement à l'élément de mâchoire inférieure (20, 120, 220) pour mouvement entre une position ouverte de mâchoire et une position fermée de mâchoire.

3. Dispositif de fixation (112) selon la revendication 1 ou la revendication 2, dans lequel le dispositif comprend une cale flexible séparable (116) pour mise en prise autour du corps (114) en vue de solliciter les éléments de mâchoires supérieure (118) et inférieure (120) vers la position fermée ; et dans lequel la cale (116) et le corps (114) comportent des formations de mise en prise mutuelle (138, 140) pour arrimer de façon libérable la cale (116) sur le corps (114).

4. Dispositif de fixation (112) selon la revendication 3, dans lequel le corps (114) est constitué d'un matériau polymérique et la cale flexible (116) est constituée d'un matériau métallique.

5. Dispositif de fixation (12) selon l'une quelconque des revendications précédentes, dans lequel l'élément de mâchoire inférieure (20) comprend une partie de mâchoire inférieure (50) pour positionnement en dessous de la région de bord inférieur (23) d'un tapis (24) et une partie d'extrémité (52) partant vers le haut depuis une extrémité arrière de la partie de mâchoire inférieure (50) pour localisation autour du bord arrière (23) du tapis (24), un bord arrière de l'élément de mâchoire supérieure (18) étant monté en pivotement sur la partie d'extrémité (52) au moyen d'une première charnière (54), la charnière excentrique (56) comprenant une première partie de charnière (58) raccordée à, et dépassant vers le bas en faisant un angle à partir de l'extrémité arrière de l'élément de mâchoire supérieure (18) et une seconde partie de charnière (60) raccordée en pivotement à une surface interne de l'élément de mâchoire inférieure (20) par une deuxième charnière (62) et dépassant vers le haut de celle-ci, les première (58) et seconde (60) parties de charnière excentrique étant raccordées mutuellement au moyen d'une troisième charnière (64).

6. Dispositif de fixation (12) selon la revendication 5, dans lequel le dispositif est configuré de telle sorte que :
lorsque la mâchoire supérieure (18) est dans la position fermée, les première (58) et seconde (60) parties de charnière excentrique dépassent vers l'arrière en direction de la partie d'extrémité (52) ;
et lorsque l'élément de mâchoire supérieure (18) est dans la position ouverte, les première (58) et deuxième (60) parties de charnière excentrique dépassent vers l'avant en éloignement de la partie d'extrémité (52).

7. Dispositif de fixation (212) selon l'une quelconque des revendications précédentes, le dispositif comprenant un agencement de cliquet libérable (270) permettant de retenir de façon libérable ledit un des éléments de mâchoires supérieure (218) et inférieure (220) dans la position fermée de mâchoire.

8. Dispositif de fixation (212) selon la revendication 7, dans lequel l'élément de mâchoire inférieure (220) comprend une partie de mâchoire inférieure (250) pour positionnement en dessous de la région de bord arrière d'un tapis et une partie d'extrémité (252) partant vers le haut depuis une extrémité arrière de la partie de mâchoire inférieure (250) pour localisation autour du bord arrière du tapis, un bord arrière de l'élément de mâchoire supérieure (218) étant monté en pivotement sur la partie d'extrémité (252) au moyen d'une première charnière (254), l'agencement de cliquet libérable (270) comprenant un premier élément de cliquet (271) sur l'élément de mâchoire inférieure (220) et un second élément de cliquet (276) sur l'élément de mâchoire supérieure (218), les premier et second éléments de cliquet ayant des formations correspondantes (272, 274) qui se mettent en prise pour retenir de façon libérable l'élément de mâchoire supérieure (218) dans la position fermée.

9. Dispositif de fixation (212) selon la revendication 8, dans lequel le premier élément de cliquet (271) comprend une formation de cale flexible (272) sur la partie d'extrémité (252) de l'élément de mâchoire inférieure (220), le second élément de cliquet (276) comprenant une première saillie partant vers le bas et vers l'arrière depuis l'élément de mâchoire supérieure (218), la saillie ayant une formation de cliquet (274) pour mise en prise dans la formation de cale flexible (272) lorsque l'élément de mâchoire supérieure (218) est dans la position fermée.

10. Dispositif de fixation (212) selon la revendication 9, dans lequel la formation de cliquet (274) est en outre supportée au moyen d'une seconde saillie (278) partant vers le haut et vers l'arrière depuis la partie de mâchoire inférieure (250) de l'élément de mâchoire inférieure (220).

11. Dispositif de fixation (12, 212) selon l'une quelconque des revendications 5 à 10, dans lequel les première (54, 254), deuxième (62) et troisième (64) charnières sont des charnières vivantes.

12. Dispositif de fixation (12, 212) selon la revendication 11, dans lequel le dispositif est un composant extrudé.

13. Dispositif de fixation (12, 112, 212) selon l'une quelconque des revendications précédentes, dans lequel au moins l'un des éléments de mâchoires supérieure (18, 118, 218) et inférieure (20, 120, 220) comporte au moins une formation de mise en prise de tapis (32, 132).

14. Dispositif de fixation (12, 112, 212) selon la revendication 13, dans lequel au moins une formation de mise en prise de tapis (32, 132) comprend au moins une dent.

15. Dispositif de fixation (12, 112, 212) selon la revendication 14, dans lequel la au moins une dent (32, 132) est dirigée vers l'arrière en cours d'utilisation.
